## Europäisches Patentamt
## European Patent Office
## Office européen des brevets

(19)

(11) Numéro de publication: **0 278 834**
**B1**

(12) # FASCICULE DE BREVET EUROPEEN

(45) Date de publication du fascicule du brevet:
26.09.90

(51) Int. Cl.⁵: **F16D 65/52**

(21) Numéro de dépôt: **88400171.0**

(22) Date de dépôt: **27.01.88**

(54) Frein à tambour à réglage automatique verrouillé à haute température.

(30) Priorité: **12.02.87 FR 8701758**

(43) Date de publication de la demande:
**17.08.88 Bulletin 88/33**

(45) Mention de la délivrance du brevet:
**26.09.90 Bulletin 90/39**

(84) Etats contractants désignés:
**DE ES GB IT**

(56) Documents cités:
**FR-A- 935 316**
**FR-A- 1 419 377**
**FR-A- 2 285 545**
**GB-A- 549 914**
**GB-A- 1 507 550**

(73) Titulaire: **BENDIX France, 126, rue de Stalingrad, F-93700 Drancy(FR)**

(72) Inventeur: **Michoux, Eric, 17, rue du Docteur Bring, F-94350 Villiers sur Marne(FR)**
Inventeur: **Denrée, Michel, 10, Place Pluton, F-93600 Aulnay Sous Bois(FR)**

(74) Mandataire: **Timoney, Ian Charles Craig et al, BENDIX FRANCE Division Technique Service Brevets Bendix Europe 126, rue de Stalingrad, F-93700 Drancy(FR)**

## Description

L'invention concerne un frein à tambour équipé d'un dispositif de réglage automatique prenant en compte l'usure des éléments de friction du frein afin que la course du moteur de frein reste pratiquement inchangée malgré cette usure. Un tel frein peut être utilisé indifféremment sur un véhicule de tourisme ou sur un poids lourd.

De façon plus précise, l'invention concerne un frein à tambour tel que celui qui est décrit dans le document FR-A-1 419 377. Ce frein à tambour comporte une plaque support sur laquelle sont montés coulissants deux segments comprenant des éléments de friction. Ces éléments sont susceptibles d'être amenés en engagement de friction contre un tambour tournant par un moteur de frein interposé entre deux extrémités adjacentes des segments. Un levier de réglage est articulé par l'une de ses extrémités sur un premier des segments, à proximité du moteur de frein, et comporte à son extrémité opposée un secteur denté. Un cliquet monté sur ce même segment est engrèné sur le secteur denté formé à l'extrémité du levier de réglage sous l'action d'un ressort de torsion.

Le frein à tambour décrit dans le document FR-A-1 419 377 comprend de plus une entretoise interposée entre les segments proximité du moteur de frein et un ressort sollicitant les extrémités des segments vers l'entretoise, de façon à amener le levier de réglage en appui sur cette dernière lorsque le moteur de frein n'est pas actionné. On définit ainsi une distance d'écartement au repos entre les extrémités précitées des segments. La coopération du cliquet avec le secteur denté formé à l'extrémité du levier de réglage est telle que seule une rotation de ce dernier dans le sens tendant à accroître cette distance d'écartement au repos est autorisée. Afin de commander cette rotation du levier de réglage lorsque l'usure des éléments de friction rend nécessaire une augmentation de cette distance d'écartement au repos, l'entretoise et le levier de réglage coopèrent entre eux par une liaison présentant un certain jeu fonctionnel.

Dans un frein de ce type, la distance séparant les extrémités des segments entre lesquelles est placé le moteur de frein lorsque ce dernier n'est pas actionné est augmentée automatiquement lorsque la course d'actionnement du moteur de frein nécessaire à l'application des éléments de friction contre le tambour dépasse une certaine valeur. Une compensation automatique de l'usure des éléments de friction est ainsi obtenue.

Cependant, en l'absence de dispositions particulières, l'écartement séparant au repos les extrémités des segments entre lesquelles est placé le moteur de frein est aussi augmenté automatiquement lorsque l'accroissement de la course d'actionnement du moteur de frein résulte d'un échauffement important. En effet, la dilatation du tambour est alors telle que l'augmentation de la course d'actionnement du moteur de frein entraîne un pivotement du levier de réglage. Il en résulte un écartement intempestif des segments risquant de conduire à un blocage du frein lorsque la température de celui-ci redevient normale.

Pour remédier à cet inconvénient il a été proposé dans le document FR-A 2 285 545, d'associer au levier de réglage un élément sensible à la temperature, qui interdit le pivotement du levier de réglage au moyen d'un levier denté engageant celui-ci, quand la température ambiante dépasse une valeur déterminée. Cependant, ce dispositif connu est d'une construction relativement compliquée.

L'invention a donc pour objet un frein à tambour du type défini précédemment, ce frein étant équipé de moyens simples permettant d'éviter qu'un échauffement n'entraîne un accroissement de la distance séparant au repos les extrémités des segments entre lesquelles est placé le moteur de frein.

Conformément à l'invention, ce résultat est obtenu grâce à un frein à tambour à réglage automatique comportant une plaque support sur laquelle sont montés coulissants deux segments comprenant des éléments de friction susceptibles d'être amenés en engagement de friction contre un tambour tournant par un moteur de frein interposé entre deux extrémités adjacentes des segments, un levier de réglage dont une extrémité est articulée sur ladite extrémité d'un premier des segments, une entretoise interposée entre les segments à proximité du moteur de frein, un moyen élastique sollicitant les extrémités des segments vers l'entretoise, de façon à amener le levier de réglage en appui sur cette dernière lorsque le moteur de frein n'est pas actionné, pour définir une distance d'écartement au repos entre lesdites extrémités des segments, un cliquet monté sur le premier segment et sollicité élastiquement contre un secteur denté formé à l'autre extrémité du levier de réglage, de façon à autoriser seulement une rotation de ce dernier dans un sens tendant à accroître cette distance d'écartement au repos, l'entretoise et le levier de réglage coopérant entre eux par une liaison définissant un jeu fonctionnel lorsque le moteur de frein n'est pas actionné, cette liaison pouvant commander la rotation du levier de réglage dans ledit sens lorsque le moteur est actionné, caractérisé en ce qu'un organe de blocage porté par un organe sensible à la température immobilise le cliquet contre le secteur denté lorsque la température est supérieure à un seuil de température donné.

Dans le frein à tambour perfectionné ainsi défini, le cliquet peut basculer normalement pour permettre le réglage du frein lorsque la température est inférieure à un certain seuil. En revanche, l'immobilisation du cliquet par l'organe de blocage pour des températures supérieures au seuil précité permet d'éviter qu'un réglage intempestif n'intervienne à la suite d'un échauffement du frein.

De préférence, l'organe sensible à la température est un bilame, ce bilame pouvant notamment être fixé sur le premier segment par une première extrémité et porter l'organe de blocage à son autre extrémité.

Selon un mode de réalisation particulier de l'invention, l'organe de blocage est une fourche à deux branches chevauchant une partie en saillie du cliquet, ces branches définissant entre elles un écartement présentant deux zones de largeurs différentes, une première zone de l'écartement, de largeur légèrement supérieure à la largeur de ladite partie en saillie, étant au niveau de cette partie lorsque la température est supérieure audit seuil, et la deuxième zone de l'écartement, de largeur très supérieure à la largeur de la partie en saillie, étant au niveau de cette partie lorsque la température est inférieure audit seuil.

Un mode de réalisation particulier de l'invention va maintenant être décrit, à titre d'exemple nullement limitatif, en se référant aux dessins annexés dans lesquels :

- la figure 1 est une vue en plan d'un frein à tambour selon l'invention,
- la figure 2 est une vue en coupe selon la ligne II-II de la figure 1,
- la figure 3 est une vue en plan, représentant à plus grande échelle le cliquet coopérant avec le secteur denté du levier de réglage, et
- les figures 4a et 4b sont des vues en coupe selon la ligne IV-IV de la figure 3, représentant l'organe de blocage du cliquet dans les positions qu'il occupe respectivement lorsque la température est inférieure et supérieure à un seuil donné.

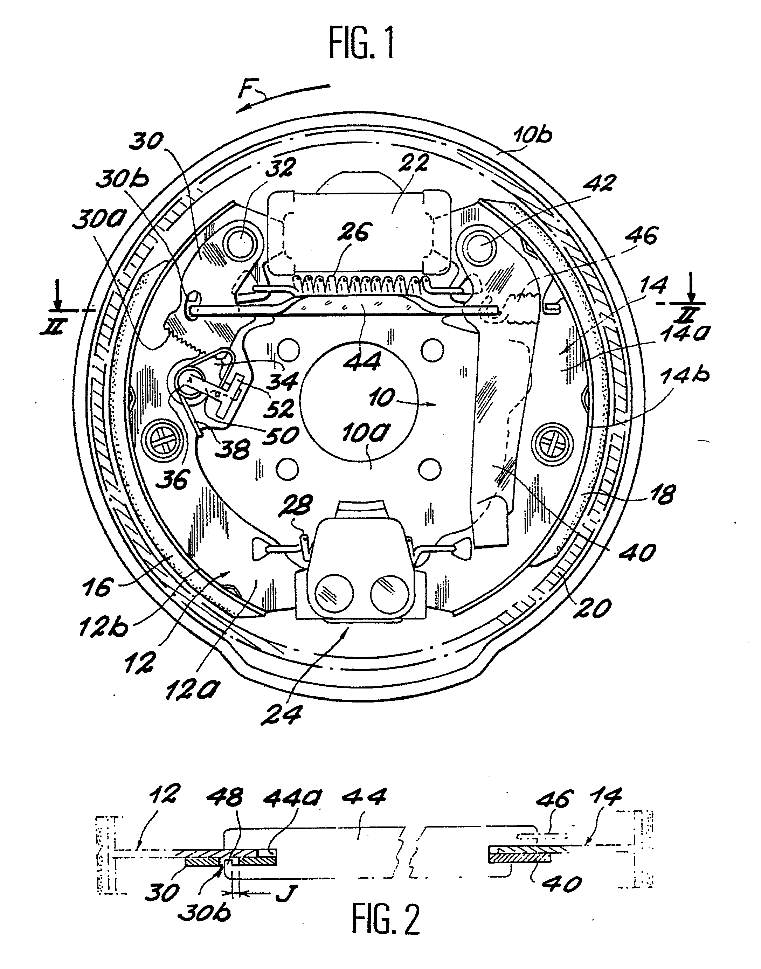

Le frein à tambour représenté sur la figure 1 comporte une plaque support 10 constituée d'un disque 10a approximativement plan, prolongé à sa périphérie par une couronne circulaire 10b. Cette plaque 10 est prévue pour être assujettie à une partie fixe du véhicule, telle qu'une bride d'essieu.

Deux segments de frein 12 et 14 sont supportés de façon coulissante par le disque 10a de la plaque support, grâce à des mécanismes habituels (non représentés). De façon bien connue, chacun des segments 12 et 14 comprend une âme 12a, 14a approximativement plane sur laquelle est fixée une jante 12b, 14b en forme d'arc de cercle supportant sur sa face extérieure une garniture de friction 16 et 18 respectivement.

Les segments 12 et 14 sont placés sur la plaque support 10 de telle sorte que les enveloppes extérieures des garnitures 16 et 18 soient situées sur un même cercle dont l'axe est confondu avec l'axe de la plaque support 10. Ainsi, les garnitures 16 et 18 peuvent venir en contact avec la surface intérieure d'un tambour de frein 20 coiffant les deux segments et représenté en traits mixtes sur la figure 1. Le tambour 20 est monté concentriquement à l'intérieur de la couronne 10b et il est fixé à une partie tournante telle qu'une roue du véhicule.

Un moteur de frein 22, à commande hydraulique, est fixé sur le disque 10a de la plaque support, entre deux premières extrémités adjacentes des segments 12. Ce moteur de frein 22 est muni de deux pistons (non représentés) fonctionnant en opposition de façon à exercer une poussée sur l'extrémité correspondante de l'âme 12a, 14a de chacun des segments, lorsque le moteur est actionné.

Un bloc d'ancrage 24, également fixé sur le disque 10a de la plaque support, est placé entre les deux autres extrémités adjacentes des segments 12 et 14, de telle sorte que les extrémités correspondantes des âmes 12a et 14a de ces segments soient normalement en appui contre ce bloc.

Un ressort de traction 26 est interposé entre les extrémités des âmes des segments entre lesquelles est placé le moteur de frein 22, à proximité immédiate de ce dernier, pour rapprocher ces extrémités l'une de l'autre lorsque le moteur n'est pas actionné. De façon comparable, le maintien des deux autres extrémités des segments 12 et 14 en appui contre le bloc d'ancrage 24 est réalisé au moyen d'un ressort de traction 28 interposé entre les extrémités correspondantes des âmes des segments, à proximité immédiate de ce bloc.

En supposant que le tambour de frein 20 tourne dans le sens de la flèche F sur la figure 1 lorsque le véhicule se déplace en marche avant, les segments 12 et 14 peuvent être distingués par le fait que le segment 12 prend appui sur le bloc d'ancrage 24 lorsqu'il est en contact de friction avec le tambour, alors que le segment 14 prend appui sur le moteur de frein 22 dans les mêmes conditions. Pour tenir compte de cette différence, les segments 12 et 14 sont appelés respectivement "segment avant" et "segment arrière".

L'une des extrémités d'un levier de réglage 30 est montée de façon pivotante par un axe 32 sur l'extrémité de l'âme du segment avant 12 qui est en appui sur le moteur de frein 22. L'extrémité opposée du levier de réglage 30 porte un secteur denté 30a centré sur l'axe de pivotement 32.

Un cliquet 34 est également monté de façon pivotante par un axe 36 sur l'âme du segment avant 12, en regard du secteur denté 30a. Un ressort de torsion 38, monté sur l'axe 36, applique les dents du cliquet 34 contre les dents du secteur denté 30a. La coopération entre le cliquet 34 et le secteur denté 30a est telle qu'il est possible de faire pivoter le levier de réglage 30 autour de son axe 32 dans le sens inverse des aiguilles d'une montre en considérant la figure 1, alors qu'un pivotement en sens inverse du levier 30 est impossible.

Dans l'exemple de réalisation représenté sur la figure 1, un levier de frein à main 40 est monté de façon pivotante par l'une de ses extrémités sur l'extrémité de l'âme du segment arrière 14 adjacente au moteur de frein 22, par l'intermédiaire d'un axe 42.

De façon connue, l'autre extrémité du levier de frein à main 40 est prévue pour être fixée à l'extrémité d'un câble de commande manuelle (non représenté).

Le frein à tambour représenté sur la figure 1 comprend de plus une entretoise 44 disposée entre les segments 12 et 14, au voisinage du moteur de frein 22, approximativement parallèlement à l'axe de ce dernier. Cette entretoise 44 est constituée par une plaque présentant deux échancrures à ses extrémités. L'âme du segment avant 12 et le levier de réglage 30 viennent se loger dans l'une 44a de ces échancrures (figure 2), alors que l'âme du segment arrière 14 et le levier de frein à main 40 viennent se loger dans l'autre échancrure. Des décrochements formés au niveau de l'entretoise 44 sur le bord intérieur de chacun des segments 12 et 14 permettent de maintenir en place l'entretoise.

L'entretoise 44 définit l'écartement minimum séparant les extrémités des segments entre lesquelles est placé le moteur de frein 22, lorsque ce dernier est relâché. En effet, le ressort 26 maintient le levier de réglage 30 et le levier de frein à main 40 dans le fond des échancrures formées aux extrémités de l'entretoise 44, lorsque le moteur de frein 22 n'est pas actionné. A cet effet, les bords intérieurs des leviers 30 et 40 sont toujours en saillie par rapport aux bords intérieurs des âmes 12a et 14a des segments qui les supportent, au niveau de la biellette 44.

Un pivotement du levier de réglage 30 dans le sens inverse des aiguilles d'une montre (figure 1) tend donc à accroître la distance séparant au repos les extrémités des segments entre lesquelles est placé le moteur 22. En commandant un tel pivotement lorsque l'usure des garnitures 16 et 18 l'exige, on compense donc automatiquement cette usure.

La commande du pivotement du levier 30 lorsque le moteur de frein 22 est actionné et lorsqu'un réglage du frein est nécessaire est effectuée par l'entretoise 44. A cet effet, un ressort de traction 46 est interposé entre l'âme 14a du segment arrière et l'extrémité de l'entretoise 40 adjacente à ce segment, de sorte que l'entretoise se déplace avec le segment arrière 14 lorsque le moteur de frein 22 est actionné. Un déplacement relatif se produit alors entre l'extrémité opposée de l'entretoise 44 et le levier de réglage 30 porté par le segment avant 12.

Comme l'illustre plus précisément la figure 2, ce déplacement a pour effet de rattraper un jeu fonctionnel J existant au repos entre un ergot 48 formé sur l'entretoise 44 et une lumière 30b formée dans le levier de réglage 30 et dans laquelle pénètre l'ergot 48.

Lorsque le jeu J formé au repos entre l'ergot 48 et la lumière 30b est rattrapé lors de la mise en oeuvre du moteur de frein 22, l'ergot 48 vient en appui sur le bord de la lumière 30b le plus proche de l'intérieur du frein. Si l'écartement existant à ce moment entre les extrémités des segments 12 et 14 actionnées par le moteur de frein 22 n'est pas suffisant pour appliquer efficacement les garnitures 16 et 18 contre le tambour tournant 20, la course du moteur de frein 22 se poursuit, ce qui a pour effet de faire pivoter le levier de réglage 30 dans le sens inverse des aiguilles d'une montre en considérant la figure 1. Lorsque ce pivotement permet au cliquet 34 de progresser d'une dent sur le secteur denté 30a, l'écartement existant au repos entre les extrémités des segments adjacentes au moteur de frein 22 se trouve augmenté.

Conformément à l'invention, des moyens sont prévus pour que le cliquet 34 soit immobilisé dans sa position dans laquelle il est engréné sur le secteur denté 30a du levier de réglage, lorsque la température est supérieure à un seuil déterminé par construction. Une augmentation intempestive de la distance séparant au repos les extrémités des segments entre lesquelles se trouve le moteur de frein 22 résultant d'une dilatation du tambour de frein est ainsi évitée.

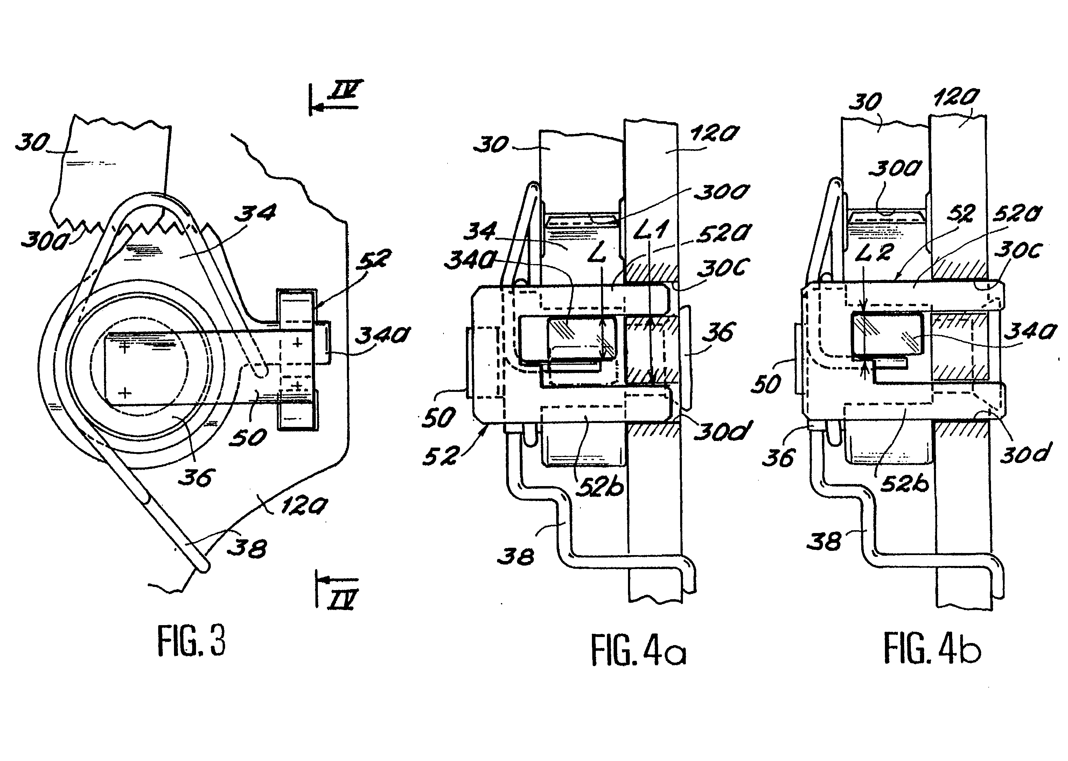

Dans le mode de réalisation représenté sur les figures 3, 4a et 4b, ces moyens comprennent un bilame 50 dont une extrémité est fixée, par exemple par soudure, à une extrémité du rivet formant l'axe de pivotement 36 du cliquet 34. Plus précisément, le rivet est solidarisé de l'âme 12a du segment avant 12 à l'une de ses extrémités et il porte le bilame 50 à son extrémité opposée, de telle sorte que le bilame soit approximativement parallèle à l'âme du segment 12.

Un organe de blocage 52 est fixé, également par soudure, l'extrémité opposée du bilame 50. Cet organe de blocage 52 a la forme d'une fourche en U fixée sur le bilame dans sa partie centrale. Les deux branches 52a et 52b de cette fourche sont orientées selon une direction parallèle à l'axe de pivotement 36, vers l'âme 12a du segment avant 12, comme l'illustrent bien les figures 4a et 4b. Les extrémités de ces branches 52a et 52b pénètrent dans des trous complémentaires 30c et 30d traversant l'âme du segment avant 12. La coopération entre les extrémités des branches 52a et 52b et les trous 30c et 30d est telle que les branches peuvent se déplacer parallèlement à l'axe 36 tout en étant maintenues latéralement dans ces trous.

Les branches 52a et 52b de l'organe de blocage 52 définissent entre elles un écartement présentant deux zones de largeurs différentes. Sur la majeure partie de la longueur des branches, allant jusqu'à l'extrémité libre de celles-ci, cette largeur a une valeur L (figure 4a) relativement grande. Au contraire, à proximité de la partie centrale de l'organe 52, largeur de l'écartement entre les branches a une valeur plus faible $L_2$ (figure 4b), obtenue par un décrochement formé sur la branche 52b la plus éloignée du levier de réglage 30.

Le cliquet 34 comporte une partie en saillie 34a, de section rectangulaire, orientée radialement par rapport à son axe de pivotement 36. Cette partie en saillie 34a passe entre les branches 52a et 52b de l'organe de blocage, de telle sorte que sa face tournée vers le levier de réglage 30 soit très proche de la branche rectiligne 52a de l'organe de blocage 52 lorsque le cliquet est engréné sur le secteur denté 30a. Comme le montrent les figures 4a et 4b, la largeur L de la partie en saillie 34a, entre les branches 52a et 52b de l'organe de blocage, est très légèrement inférieure à la largeur $L_2$ et très nettement inférieure à la largeur $L_1$.

La figure 4a illustre la position dans laquelle se trouve l'organe de blocage 52 lorsque la température ambiante est inférieure à un certain seuil, par exemple voisin de 250°C. Dans ces conditions, le bilame 50 n'est pratiquement pas déformé et la partie en saillie 34a du cliquet se trouve dans la zone de plus grande largeur $L_1$ de l'écartement formé entre les branches 52a et 52b de l'organe de blocage. Lorsqu'un réglage du frein est nécessaire, le cliquet 34 peut alors pivoter comme on l'a représenté en traits mixtes sur la figure 4a, pour sauter une dent sur le secteur denté 30a du levier de réglage 30.

Au contraire, on voit sur la figure 4b que lorsque la température ambiante franchit le seuil précité, la partie en saillie 34a du cliquet se trouve en partie dans la zone de plus faible largeur $L_2$ de l'écartement défini entre les deux branches de l'organe de blocage 52. Tout pivotement du cliquet 34 autour de son axe 36 est alors empêché, de sorte qu'une rotation du levier de réglage n'est pas possible. Un réglage intempestif du frein dû à l'échauffement est donc impossible.

Bien entendu, le mode de réalisation qui vient d'être décrit peut subir différentes modifications sans sortir du cadre de l'invention. Ainsi, le bilame portant l'organe de blocage pourrait être fixé directement sur le segment sur lequel est monté le cliquet. L'organe de blocage peut aussi être réalisé différemment, notamment sous la forme d'une tige pouvant pénétrer dans un trou formé dans le cliquet, lorsque la température dépasse le seuil précité.

**Revendications**

1. Frein à tambour à réglage automatique comportant une plaque support (10) sur laquelle sont montés coulissants deux segments (12, 14) comprenant des éléments de friction (16, 18) susceptibles d'être amenés en engagement de friction contre un tambour tournant (20) par un moteur de frein (22) interposé entre deux extrémités adjacentes des segments, un levier de réglage (30) dont une extrémité est articulée sur ladite extrémité d'un premier des segments (12), une entretoise (44) interposée entre les segments à proximité du moteur de frein, un premier moyen élastique (26) sollicitant les extrémités des segments vers l'entretoise, de façon à amener le levier de réglage en appui sur cette dernière lorsque le moteur de frein n'est pas actionné, pour définir une distance d'écartement au repos entre lesdites extrémités des segments, un cliquet (34) monté sur le premier segment et sollicité élastiquement contre un secteur denté (30a) formé à l'autre extrémité du levier de réglage, de façon à autoriser seulement une rotation de ce dernier dans un sens tendant à accroître cette distance d'écartement au repos, l'entretoise et le levier de réglage coopérant entre eux par une liaison (48, 30b) définissant un jeu fonctionnel (J) lorsque le moteur de frein n'est pas actionné, cette liaison pouvant commander la rotation du levier de réglage dans ledit sens lorsque le moteur est actionné, caractérisé en ce qu'un organe de blocage (52) porté par un organe (50) sensible à la température immobilise le cliquet (34) contre le secteur denté (30a) du levier de réglage (30) lorsque la température est supérieure à un seuil de température donné.

2. Frein à tambour selon la revendication 1, caractérisé en ce que ledit organe sensible à la température est un bilame (50).

3. Frein à tambour selon la revendication 2, caractérisé en ce que le bilame (50) est fixé sur le premier segment par une première extrémité et porte l'organe de blocage (52) à son autre extrémité.

4. Frein à tambour selon la revendication 3, caractérisé en ce que l'organe de blocage (52) est une fourche à deux branches (52a, 52b) chevauchant une partie en saillie (34a) du cliquet (34), ces branches définissant entre elles un écartement présentant deux zones de largeurs différentes, une première zone de l'écartement, de largeur (L₂) légèrement supérieure à la largeur (L) de ladite partie en saillie (34a), étant au niveau de cette partie lorsque la température est supérieure audit seuil, et la deuxième zone de l'écartement, de largeur (L₁) très supérieure à la largeur (L) de la partie en saillie (34a), étant au niveau de cette partie lorsque la température est inférieure audit seuil.

5. Frein à tambour selon la revendication 4, caractérisé en ce que les extrémités des branches (52a, 52b) de l'organe de blocage (52) sont guidées dans des trous complémentaires (30c, 30d) formés dans le premier segment (12).

**Claims**

1. Drum brake with automatic adjustment, comprising a support plate (10), on which are slidably mounted two shoes (12, 14) having friction elements (16, 18) capable of being brought into frictional engagement against a rotating drum (20) by means of a brake motor (22) interposed between two adjacent ends of the shoes, an adjusting lever (30), one end of which is articulated on the said end of a first shoe (12), a spacer (44) interposed between the shoes near the brake motor, a first elastic means (26) stressing the ends of the shoes towards the spacer, so as to bring the adjusting lever up against the latter when the brake motor is not actuated, in order to define a spacing distance at rest between the said ends of the shoes, and a pawl (34) mounted on the first shoe and stressed elastically against a toothed quadrant (30a) formed at the other end of the adjusting lever, so as to allow the latter to rotate only in a direction tending to increase this spacing distance at rest, the spacer and the adjusting lever interacting with one another via a connection (48, 30b) defining a functional play (J) when the brake motor is not actuated, this connection being capable of controlling the rotation of the adjusting lever in the said direction when the motor is actuated, characterized in that a blocking member (52) carried by a temperature-sensitive member (50) immobilises the pawl (34) against the toothed quadrant (30a) when the temperature is higher than a given temperature threshold.

2. Drum brake according to Claim 1, characterized in that the said temperature-sensitive member is a bimetallic strip (50).

3. Drum brake according to Claim 2 characterized in that the bimetallic strip (50) is fastened to the first shoe at a first end and carries the blocking member (52) at its other end.

4. Drum brake according to Claim 3, characterized in that the blocking member (52) is a fork with two prongs (52a, 52b) straddling a projecting part (34a) of the pawl (34), these prongs defining between them a clearance having two zones of different widths, a first zone of the clearance, of a width (L₂) slightly greater than the width (L) of the said projecting part (34a), being level with this part when the temperature is higher than the said threshold, and the second zone of the clearance, of a width (L₁) much greater than the width (L) of the projecting part (34a), being level with this part when the temperature is below the said threshold.

5. Drum brake according to Claim 4, characterized in that the ends of the prongs (52a, 52b) of the blocking member (52) are guided in matching holes (30c, 30d) made in the first shoe (12).

**Patentansprüche**

1. Trommelbremse mit selbsttätiger Nachstellung, mit einer Trägerplatte (10), an der zwei Segmente (12, 14) mit Reibbelägen (16, 18) gleitend gelagert sind, die durch einen zwischen benachbarten Enden der Segmente angeordneten Bremsmotor (22) in Reibanlage mit einer umlaufenden Trommel (20) bewegbar sind, einem Steuerhebel (30), der mit einem Ende an dem besagten Ende eines ersten Segmentes (12) angelenkt ist, einer Strebe (44), die zwischen den Segmenten in Nähe des Bremsmotors angeordnet ist, einem ersten elastischen Mittel (26), das die Enden der Segmente in Richtung auf die Strebe vorspannt, derart, daß der Steuerhebel gegen die letztere angedrückt wird, wenn der Bremsmotor nicht betätigt wird, um einen Ruheabstand zwischen den besagten Enden der Segmente zu definieren, einer Sperrklinke (34), die an dem ersten Segment angebracht ist und elastisch gegen einen verzahnten Sektor (30a) angedrückt wird, welcher am anderen Ende des Steuerhebels gebildet ist, derart, daß eine Drehung des Steuerhebels nur in Richtung einer Vergrößerung des Ruheabstands möglich ist, wobei die Strebe und der Steuerhebel durch eine Verbindung (48, 30b) zusammenwirken, die ein Spiel (J) definiert, wenn der Bremsmotor nicht betätigt wird, wobei diese Verbindung die Drehbewegung des Steuerhebels in der besagten Richtung steuern kann, wenn der Motor betätigt wird, dadurch gekennzeichnet, daß ein Sperrglied (52), das von einem temperaturempfindlichen Element (50) getragen wird, die Sperrklinke (34) gegen den verzahnten Sektor (30a) des Steuerhebels (30) festlegt, wenn die Temperatur größer als eine vorgegebene Temperaturschwelle ist.

2. Trommelbremse nach Anspruch 1, dadurch gekennzeichnet, daß das temperaturempfindliche Element ein Bimetall (50) ist.

3. Trommelbremse nach Anspruch 2, dadurch gekennzeichnet, daß das Bimetall (50) mit einem ersten Ende an dem ersten Segment befestigt ist und an seinem anderen Ende das Sperrglied (52) trägt.

4. Trommelbremse nach Anspruch 3, dadurch gekennzeichnet, daß das Sperrglied (52) eine Gabel mit zwei Gabelarmen (52a, 52b) ist, die reiterartig einen vorstehenden Abschnitt (34b) der Sperrklinke (34) übergreifen, wobei die Gabelarme zwischen sich einen Abstand mit zwei Bereichen unterschiedlicher Breite definieren, wobei ein erster Abstandsbereich einer Breite (L₂), die geringfügig größer ist als die Breite (L) des vorstehenden Abschnittes (34a), auf Höhe dieses Abschnittes liegt, wenn die Temperatur größer als die Temperaturschwelle ist, und der zweite Abstandsbereich einer Breite (L₁), die sehr viel größer als die Breite (L) des vorstehenden Abschnittes (34a) ist, auf Höhe dieses Abschnittes liegt, wenn die Temperatur kleiner als die Temperaturschwelle ist.

5. Trommelbremse nach Anspruch 4, dadurch gekennzeichnet, daß die Enden der Gabelarme (52a, 52b) des Sperrgliedes (52) in komplementären Löchern (30c, 30d) geführt sind, die in dem ersten Segment (12) gebildet sind.

# FIG. 1

# FIG. 2

FIG. 3

FIG. 4a

FIG. 4b

EP 0 278 834 B1